# EUROPÄISCHE PATENTSCHRIFT

(11) **EP 3 871 822 B1**
(45) Veröffentlichungstag und Bekanntmachung des Hinweises auf die Patenterteilung: **02.09.2026**
(21) Anmeldenummer: 20159791.1
(22) Anmeldetag: 27.02.2020
(51) Int. Cl.: B23K 20/10, B23K 31/12

(54) **VERFAHREN ZUM ÜBERWACHEN DES ZUSTANDES EINES SCHWINGUNGSBEARBEITUNGSSYSTEMS**
METHOD FOR MONITORING THE STATE OF A VIBRATION PROCESSING SYSTEM
PROCÉDÉ DE SURVEILLANCE DE L'ÉTAT D'UN SYSTÈME D'USINAGE PAR VIBRATION

(43) Veröffentlichungstag der Anmeldung: 01.09.2021
(73) Patentinhaber: Telsonic Holding AG, 9552 Bronschhofen (CH)
(72) Erfinder: AYABAKAN, Mustafa, 9545 Wängi (CH); HVIID, Björn, 8536 Hüttwilen (CH)
(74) Vertreter: Hepp Wenger Ryffel AG

(56) Entgegenhaltungen:
- WO-A1-2008/031823
- DE-A1- 3 429 776
- DE-B3- 102017 106 539

## Beschreibung

Die Erfindung betrifft ein Verfahren zum Überwachen eines Zustandes eines Schwingungsbearbeitungssystems entsprechend Anspruch 1. Offenbart werden ausserdem ein Schwingungsbearbeitungssystem und ein Verfahren zum Ermitteln eines Referenzparameters, die nicht beansprucht sind.

Es ist in vielen Anwendungsgebieten bekannt, Werkstücke mittels Schwingungen zu bearbeiten. Beispielsweise werden Ultraschallschwingungen zum Verschweissen von Werkstücken aus Kunststoff oder Metall verwendet. Es ist aber auch bekannt, Ultraschallschwingungen zum Versiegeln von Verpackungen, zum Stanzen von Werkstücken oder zum Bearbeiten von pulverförmigen oder flüssigen Substanzen einzusetzen. Ebenso ist es bekannt, Werkstücke mit Schwingungssystemen mit anderen Frequenzen, insbesondere niederfrequenten Schwingungen zu bearbeiten. Auch solche als Vibrationsschweissen bezeichnete Verfahren werden zum Verbinden von Werkstücken eingesetzt.

Während des Betriebs von solchen Systemen kann sich das System verändern, insbesondere durch Abnutzung von einzelnen Werkzeugen. Insbesondere beim Schweissen mit Ultraschallschwingungen werden Sonotroden eingesetzt, welche geriffelte Kontaktflächen für die Werkstücke aufweisen. Im Laufe der Zeit können solche Riffellungen abgenutzt werden und die Qualität der Schweissung kann sich verschlechtern.

Es ist bereits bekannt, die Qualität von Schweissverbindungen laufend zu überwachen, indem beispielsweise während des Schweissvorgangs Prozessparameter des Systems oder Schwingungseigenschaften der bearbeiteten Werkstücke überwacht werden. Entsprechende Lösungen sind beispielsweise aus WO 2008/031823 A1, DE 10 350 809 B3, DE 10 2013 222 876 A1, US 2013/0105557, US 10,466,204 B2, DE 3429776 A1 oder WO 2004/096480 A1 bekannt.

Diese bekannten Lösungen basieren meist darauf, dass ein konkretes Werkstück behandelt, typischerweise verschweisst wird und dass im Laufe der Verschweissvorgangs oder am Ende des Verschweissvorgangs Eigenschaften der Schweissung ermittelt werden. Damit kann es möglich sein, die Güte der Schweissung zu ermitteln und eine Gutteilerkennung vorzunehmen. Weil es aber zwischen einzelnen Werkstücken Abweichungen geben kann, erlauben diese bekannten Verfahren keinen direkten Rückschluss auf den Zustand des Bearbeitungssystems. Ausserdem werden Veränderungen im System mit diesen bekannten Verfahren erst bekannt, wenn die Veränderung bereits zu unzureichenden Schweissergebnissen geführt hat. Bearbeitete Werkstücke müssen daher als Schlechtteile ausgesondert werden.

Es ist deshalb die Aufgabe der vorliegenden Erfindung, die Nachteile des Bekannten zu vermeiden, insbesondere also ein Verfahren zum Überwachen des Zustandes eines Schwingungsbearbeitungssystems zu schaffen, bei dem der Zustand frühzeitig und zuverlässig erkannt werden kann.

Erfindungsgemäss werden diese Aufgaben mit einem Verfahren mit den Merkmalen des unabhängigen Patentanspruchs 1 gelöst.

Das erfindungsgemässe Verfahren dient zum Überwachen des Zustandes eines Schwingungsbearbeitungssystems. Typischerweise handelt es sich dabei um ein Ultraschallbearbeitungssystem, insbesondere ein Ultraschallschweisssystem. Die Überwachung erfolgt im laufenden Betrieb des Schwingungsbearbeitungssystems. Insbesondere im Rahmen von Wartung und Service gelangt das Verfahren vorteilhaft zum Einsatz.

Das Verfahren kann auch angewendet werden, um nach dem Wechsel von einzelnen Komponenten des Systems festzustellen, ob ein vorher definierter Sollzustand oder Initialzustand wieder vorliegt.

Das Schwingungsbearbeitungssystem und insbesondere das Ultraschallschweisssystem enthält mindestens einen Generator, einen Konverter und eine Sonotrode sowie einen Vorschub. Der Generator dient zum Erzeugen von elektrischen Schwingungen, insbesondere Ultraschallschwingungen. Der Konverter erzeugt aus den hochfrequenten elektrischen Schwingungen mechanische Schwingungen und überträgt diese auf die Sonotrode. Der Vorschub dient zum Bewegen der Sonotrode gegen ein Werkstück hin und zum Beaufschlagen der Sonotrode mit einer Kraft.

Im Rahmen des Verfahrens zum Überwachen des Zustandes wird zuerst eine Arbeitsfläche der Sonotrode mit einem Prüfkörper in Kontakt gebracht. Bevorzugt wird dabei bereits eine Kraft von der Sonotrode auf den Prüfkörper ausgeübt. Dies heisst, dass mittels des Vorschubs die Sonotrode nicht nur kontaktiert, sondern auch mit einer Kraft beaufschlagt wird.

Wenn die Arbeitsfläche der Sonotrode mit dem Prüfkörper in Kontakt ist, werden Schwingungen von der Sonotrode in den Prüfkörper eingeleitet.

Auf einem Amboss ist ein Prüfkörper aus einem für die Anwendung geeigneten Werkstoff (z.B. Stahl) angeordnet. Beim Prüfkörper handelt es sich typischerweise um ein passives Bauteil aus einem geeignet gewählten Material. Je nach Applikation können sich harte oder weiche Materialien anbieten. Typischerweise kann der Prüfkörper aus einem Kunststoffmaterial oder aus einem Metall bestehen. Insbesondere können ähnliche Materialien ausgewählt werden wie für das Werkstück, welches mit dem Schwingungsbearbeitungssystem, insbesondere dem Ultraschallbearbeitungssystem, letztlich bearbeitet werden soll. Es ist aber auch denkbar, zusammengesetzte Prüfkörper aus unterschiedlichen Materialien zu verwenden. Auch ist es denkbar, im Prüfkörper aktive Komponenten, z.B. Sensoren einzubauen. Mit solchen Sensoren kann beispielsweise eine Verformung oder eine auf den Prüfkörper einwirkende Kraft gemessen werden.

Während des Einleitens der Schwingungen wird wenigstens ein Messparameter des Schwingungsbearbeitungssystems bestimmt. Dabei handelt es sich um interne Parameter des Systems wie beispielsweise Betriebsgrössen des Generators oder Schwingparameter der Sonotrode.

Der wenigstens eine Messparameter wird dann mit wenigstens einem Referenzparameter verglichen. In einem abschliessenden Schritt wird bestimmt, ob der Messparameter innerhalb eines Toleranzbereichs um den Referenzparameter herum liegt.

Dabei ist der Begriff Toleranzbereich breit zu verstehen. Es ist auch denkbar, dass bei Vorhandensein von mehreren Referenzparametern und beim Messen von mehreren Messparametern eine Gesamtabweichung ermittelt wird oder dass einzelne Parameter unterschiedlich gewichtet werden, was alles als von der Bildung eines Toleranzbereichs umfasst verstanden werden soll.

Die Schritte des Vergleichs und des Bestimmens können innerhalb des Schwingungsbearbeitungssystems erfolgen. Es ist aber auch denkbar, diese in einem externen Rechner durchzuführen.

Bevorzugt werden mehrere Messparameter bestimmt und mit mehreren Referenzparametern verglichen. Insbesondere ist es auch denkbar, mehrere Messparameter unter sich verändernden Prozessbedingungen zu bestimmen. Auf diese Weise ergibt sich ein mehrdimensionaler Fingerabdruck des Schwingungsbearbeitungssystems, insbesondere des Ultraschallschweisssystems, der charakteristisch für einen bestimmten Zustand des Systems ist. Auf diese Weise lässt sich zuverlässig eine Veränderung des Systems ermitteln.

Bevorzugt ist der Referenzparameter im Schwingungsbearbeitungssystem, insbesondere im Ultraschallbearbeitungssystem, selbst gespeichert. Es ist aber auch denkbar, über eine Datenverbindung auf dezentral gespeicherte Referenzparameter zuzugreifen. Insbesondere ist es denkbar, in einer Cloud-basierten Lösung für verschiedene Anwender Referenzparameter zentral bereitzustellen und zu verwalten.

Der Referenzparameter wird bevorzugt mit einem Initialverfahren erzeugt und definiert. Dabei wird zuerst die Arbeitsfläche der Sonotrode mit dem Prüfkörper in Kontakt gebracht und es werden Schwingungen von der Sonotrode in den Prüfkörper eingeleitet. Während der Einleitung der Schwingungen, insbesondere der Ultraschallschwingungen, wird wenigstens ein initialer Messparameter des Schwingungsbearbeitungssystem, insbesondere des Ultraschallsystems, bestimmt. Dieser initiale Messparameter wird als Referenzparameter abgespeichert. Die Betriebsparameter des Schwingungsbearbeitungssystems für die Erzeugung des Referenzparameters sind dabei identisch zu den Betriebsparametern während der späteren Überwachung des Schwingungsbearbeitungssystems zur Erzeugung des Messparameters. Auf diese Weise wird sichergestellt, dass ein sinnvoller Vergleich zwischen Messparameter und Referenzparameter möglich ist. Es wäre aber auch denkbar, einen Referenzparameter unter anderen Betriebsbedingungen zu bestimmen und rechnerisch weiter zu verarbeiten, sodass eine Vergleichbarkeit mit den Messparametern ermöglicht wird.

Gemäss einer bevorzugten Ausführungsform wird eine Warnung ausgegeben, wenigstens ein Betriebsparameter für Schwingungsbearbeitungsvorgänge, insbesondere weitere Ultraschallbearbeitungsvorgänge, angepasst oder ein detaillierterer Folgetest durchgeführt, wenn der Messparameter ausserhalb des Toleranzbereichs liegt. Durch eine Warnung kann der Anwender der Vorrichtung beispielsweise darauf hingewiesen werden, dass einzelne Komponenten ausgetauscht oder gereinigt werden müssen. Durch Anpassung von Betriebsparametern kann das Schwingungsbearbeitungssystem, insbesondere das Ultraschallbearbeitungssystem, bei Veränderungen der Eigenschaften von einzelnen Komponenten angepasst und so bei gleichbleibender Qualität weiter betrieben werden. Selbstverständlich sind auch Kombinationen der beiden genannten Aktionen denkbar: In einem ersten Schritt können bei Veränderung beispielsweise der Sonotrode die Betriebsparameter angepasst werden. Bei zu starker Veränderung kann dann eine Warnung ausgegeben werden.

Ein detaillierterer Folgetest kann sinnvoll sein, wenn aufgrund einer zu grossen Abweichung zwischen Messparameter und Referenzparameter klar wird, dass sich das Schwingungsbearbeitungssystem, insbesondere das Ultraschallbearbeitungssystem, geändert hat, es aber noch nicht klar ist, worin die konkrete Abweichung besteht. Mit einem Folgetest kann dann eruiert werden, wo die Veränderungen vorliegen. Ein solcher Folgetest kann beispielsweise über einen längeren Zeitabschnitt durchgeführt werden oder es können mehrere Betriebsparameter im Laufe der Zeit variiert werden.

Gemäss einem weiteren bevorzugten Ausführungsbeispiel werden während der Einleitung der Schwingungen, insbesondere der Ultraschallschwingungen, in den Prüfkörper eine oder mehrere Betriebsparameter im Laufe der Zeit variiert. Insbesondere kann die auf den Prüfkörper ausgeübte Kraft, die Amplitude der Schwingungen, insbesondere der Ultraschallschwingungen, die Frequenz der Schwingungen, insbesondere der Ultraschallschwingungen, oder die Temperatur der Werkzeuge, insbesondere der Sonotrode, verändert werden. Insbesondere in Fällen, in denen eine Temperierung vorliegt, ist es auch denkbar, Schwingungen, insbesondere Ultraschallschwingungen, bei zwei unterschiedlichen Temperaturen in den Prüfkörper einzuleiten und unterschiedliche Reaktionen des Systems in Abhängigkeit der unterschiedlichen Temperaturen zu ermitteln. Während der Veränderung der Betriebsparameter wird der Messparameter laufend bestimmt. Dabei kann der Messparameter kontinuierlich gemessen werden. Es ist aber auch denkbar, den Messparameter von Zeit zu Zeit in einzelnen Messpunkten zu bestimmen. Gleichzeitig ist es auch denkbar, je nach Situation unterschiedliche zeitabhängige Verläufe der Betriebsparameter vorzusehen. So ist es denkbar, in einem ersten Testschritt die auf den Prüfkörper ausgeübte Kraft langsam ansteigend zu lassen und in einem zweiten Testschritt die Kraft schnell ansteigen zu lassen.

Besonders bevorzugt wird die Amplitude der auf dem Prüfkörper ausgeübten Schwingungen, insbesondere Ultraschallschwingungen, von einem Start- bis zu einem Endwert erhöht, während der Messparameter laufend bestimmt wird. Typischerweise kann die Amplitude von etwa 20 % bis auf einen Endwert erhöht werden, der der maximalen Amplitude entspricht.

Der Prüfkörper und die Betriebsbedingungen sind derart ausgebildet und eingestellt, dass durch das Einleiten der Schwingungen, insbesondere der Ultraschallschwingungen, keine dauerhafte Veränderung des Prüfkörpers erfolgt. Auf diese Weise kann der gleiche Prüfkörper mehrfach eingesetzt werden.

Der Messparameter kann insbesondere die durch den Generator aufgenommene Energie, die durch den Generator aufgenommene Leistung, die Betriebsfrequenz des Generators, die Amplitude der Sonotrode, die durch den Vorschub ausgeübte Kraft, die von der Sonotrode zurückgelegte Wegstrecke, die Temperatur eines Werkzeugs, insbesondere der Sonotrode oder aufgenommener Schall sein.

Die vom Generator aufgenommene Energie oder Leistung kann aus elektrischen Parametern des Generators (Spannung und Strom) errechnet werden. Die Betriebsfrequenz des Generators kann ebenfalls aus inneren Betriebsdaten bestimmt werden. Die Amplitude der Sonotrode kann entweder mittels einer Messzelle gemessen werden (beispielsweise optisch, kapazitiv oder induktiv) oder auf an sich bekannte Art und Weise aus den Betriebsparametern des Generators errechnet werden. Die durch den Vorschub ausgeübte Kraft kann mit einem Kraftmesssensor direkt oder indirekt über Betriebsparameter des Vorschubs (beispielsweise Pneumatikdruck) ermittelt werden. Ebenso kann die an der Sonotrode zurückgelegte Wegstrecke aus Betriebsparametern des Vorschubs oder durch externe Sensoren bestimmt werden. Die Temperatur des Werkzeugs kann durch einen separaten Thermometer, der in Kontakt mit dem Werkzeug steht, gemessen werden. Denkbar ist auch eine indirekte, z.B. auf Infrarotstrahlung basierte Temperaturbestimmung. Der herrschende Schall kann beispielsweise mit einem herkömmlichen Mikrofon ermittelt werden. Dabei können insbesondere parasitäre Schwingungen oder Nebenfrequenzen bestimmt werden. Aufgrund einer Veränderung der Sonotrode können sich solche Nebenfrequenzen verändern. Insbesondere mittels Fouriertransformation kann eine solche Veränderung festgestellt werden.

Ausgehend von der Bestimmung, ob der Messparameter innerhalb des Toleranzbereichs um den Referenzparameter liegt, kann konkret ein Verschleiss der Arbeitsfläche der Sonotrode ermittelt werden. Der Verschleiss kann bevorzugt im Schwingungsbearbeitungssystem ausgegeben werden. Insbesondere wenn eine grosse Anzahl von Messparametern zur Verfügung steht und berücksichtigt wird, lässt sich ein konkreter Hinweis auf einen Grad des Verschleisses erzielen. Dazu können auch Verfahren unter Anwendung von künstlicher Intelligenz, insbesondere maschinellen Lernen verwendet werden. Auf diese Weise kann eine grosse Anzahl von unterschiedlichen Betriebsparametern, Messparametern und zeitlichen Änderungen von Betriebsparametern berücksichtig werden.

Offenbart, aber nicht beansprucht ist ausserdem ein Schwingungsbearbeitungssystem mit einem Generator, einem Konverter, einer mit dem Konverter zu Schwingungen anregbaren Sonotrode und einem Vorschub zum Bewegen der Sonotrode und zum Beaufschlagen der Sonotrode mit einer Kraft. Dem Schwingungsbearbeitungssystem, insbesondere einem Ultraschallbearbeitungssystem, ist dabei eine Überwachungsanordnung zugeordnet. Die Überwachungsanordnung enthält eine Steuereinheit, eine Recheneinheit, eine Messeinheit und eine Speichereinheit.

Die Messeinheit ist zum Bestimmen wenigstens eines Messparameters des Schwingungsbearbeitungssystems ausgebildet. Insbesondere ist die Messeinheit zum Bestimmen des Messparameters bei Betrieb des Schwingungsbearbeitungssystems unter Last ausgebildet.

Die Speichereinheit dient zum Speichern mindestens eines Referenzparameters und ist zu diesem Zweck ausgebildet.

Die Steuereinheit ist zur Kontrolle und zur Betätigung des Vorschubs und zur Kontrolle der Erzeugung der Schwingungen, insbesondere der Ultraschallschwingungen, ausgebildet.

Die Recheneinheit dient zum Vergleichen des Messparameters oder der Messparameter mit dem / den Referenzparameter(n). Gleichzeitig ist die Recheneinheit auch zum Bestimmen, ob der Messparameter innerhalb eines Toleranzbereichs um den Referenzparameter liegt, ausgebildet.

Funktionell bilden dabei Steuereinheit, Recheneinheit, Messeinheit und Speichereinheit individuelle Einheiten. Es versteht sich, dass die verschiedenen Einheiten strukturell durch das gleiche Gerät ausgebildet sein können, insbesondere durch einen Mikroprozessor mit zugeordnetem Speicher und Inputs und Outputs. Die verschiedenen Einheiten können auch in einem herkömmlichen Personal Computer oder in einer Prozesssteuerung implementiert sein. Besonders bevorzugt werden die verschiedenen Einheiten durch einen im Generator enthaltenen Prozessor implementiert.

Bevorzugt ist die Recheneinheit zur Erzeugung einer Warnung und/oder zur Anpassung eines Betriebsparameters für weitere Bearbeitungsvorgänge, insbesondere weitere Ultraschallbearbeitungsvorgänge, ausgebildet, wenn der Messparameter ausserhalb des Toleranzbereichs liegt. Die Rechenanordnung kann auch zum Ausüben eines Folgetests ausgebildet sein, wenn der Messparameter ausserhalb des Toleranzbereichs liegt.

Bevorzugt ist die Steuereinheit dazu ausgebildet, während der Einleitung der Schwingungen, insbesondere der Ultraschallschwingungen, in den Prüfkörper die auf den Prüfkörper ausgeübte Kraft, die Amplitude der Schwingungen, insbesondere der Ultraschallschwingungen, und/oder die Frequenz der Schwingungen, insbesondere der Ultraschallschwingungen, zu verändern. Dabei ist die Messeinheit ausgebildet, den Messparameter laufend zu bestimmen. Die Steuereinheit kann insbesondere ausgebildet sein, um die Amplitude der auf den Prüfkörper ausgeübten Schwingungen, insbesondere Ultraschallschwingungen, von einem Startwert bis zu einem Endwert zu erhöhen. Dabei kann die Erhöhung kontinuierlich, in Stufen oder auch gemäss anderem zeitlichen Verlauf erfolgen. Bevorzugt wird die Amplitude von etwa 20 % bis auf 100 % einer maximalen Amplitude erhöht.

Wenn die Recheneinheit zur Ermittlung eines Verschleisses der Arbeitsfläche der Sonotrode auf Basis der Bestimmung, ob der Messparameter innerhalb des Toleranzbereichs um den Referenzparameter liegt, ausgebildet ist, kann das Schwingungsbearbeitungssystem, insbesondere das Ultraschallbearbeitungssystem, ausserdem eine Ausgabeeinheit zur Ausgabe des Verschleisses aufweisen. Dabei kann es sich um eine separate Anzeige handeln. Bevorzugt wird aber die Ausgabeeinheit durch ein an sich schon vorhandenes Display gebildet, beispielsweise ein Display des Generators.

Offenbart, aber nicht beansprucht ist ausserdem ein Verfahren zum Ermitteln eines Referenzparameters zum Überwachen des Zustandes eines Schwingungsbearbeitungssystems, insbesondere eines Ultraschallbearbeitungssystems.

Das Schwingungsbearbeitungssystem enthält dabei mindestens einen Generator, einen Konverter, eine mit dem Konverter zu Schwingungen, insbesondere Ultraschallschwingungen anregbare Sonotrode und einen Vorschub zum Bewegen der Sonotrode und zum Beaufschlagen der Sonotrode mit einer Kraft.

In einem ersten Schritt wird eine Arbeitsfläche der Sonotrode mit einem Prüfkörper in Kontakt gebracht. Insbesondere wird die Sonotrode mit einer Kraft beaufschlagt, sodass sie eine Kraft auf den Prüfkörper ausübt. Dabei werden Schwingungen, insbesondere Ultraschallschwingungen von der Sonotrode in den Prüfkörper eingeleitet. Während der Einleitung der Schwingungen wird wenigstens ein initialer Messparameter des Schwingungsbearbeitungssystems gemessen. Dieser initiale Messparameter wird dann als Referenzparameter definiert und gespeichert.

Die Erfindung wird im Folgenden anhand der Zeichnungen und einzelner Ausführungsbeispiele näher erläutert. Es zeigen:
- Figur 1:: Eine schematische Darstellung eines Ultraschallbearbeitungssystems mit von einem Prüfkörper beabstandeter Sonotrode.
- Figur 2:: Das Ultraschallbearbeitungssystem aus Figur 1 mit Sonotrode in Kontakt mit dem Prüfkörper.
- Figuren 3 & 4:: Schematische Darstellungen des Verlaufs von Messparametern.

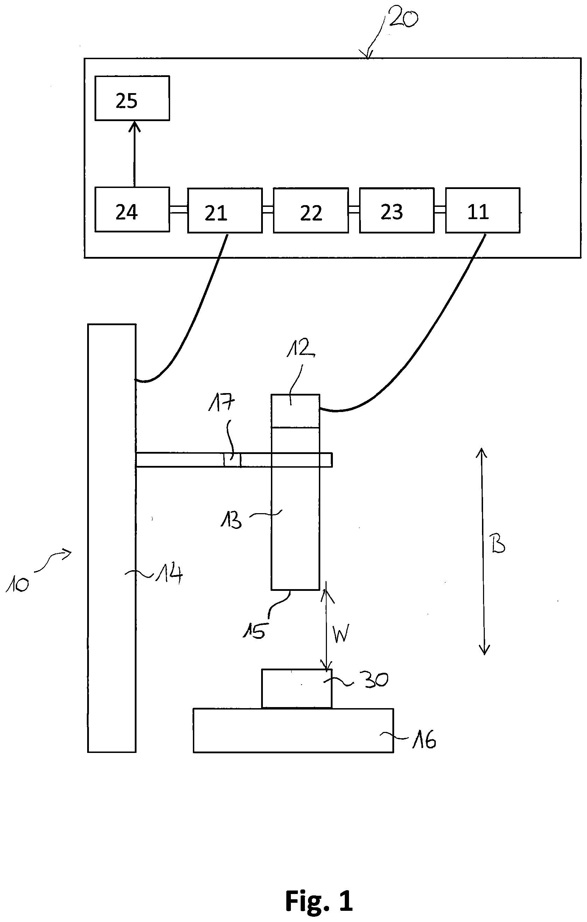

Figur 1 zeigt schematisch ein Ultraschallbearbeitungssystem 10. Das Ultraschallbearbeitungssystem 10 weist einen Generator 11 auf. Der Generator 11 erzeugt ein elektrisches Signal mit einer Frequenz im Bereich von Ultraschall, typischerweise 20 bis 30 kHz, mit welchem ein Konverter 12 angetrieben wird. Der Konverter 12 ist in an sich bekannter Art und Weise aus piezoelektrischen Scheiben aufgebaut.

Der Konverter 12 ist mit einer Antriebsseite einer Sonotrode 13 verbunden und bringt die Sonotrode 13 zu Ultraschallschwingungen. Die Ultraschallschwingungen werden insbesondere an einer Arbeitsfläche 15 erzeugt. In Figur 1 ist schematisch eine Anordnung gezeigt, in der longitudinale Schwingungen, das heisst Schwingungen in einer Richtung senkrecht zur Arbeitsfläche 15, erzeugt werden. Es ist aber auch denkbar, Schwingungen in einer Richtung parallel zur Arbeitsfläche 15 zu erzeugen, beispielsweise torsionale Schwingungen oder auch Längsschwingungen. Je nach Applikation sind unterschiedliche Schwingungsformen denkbar.

Die Anordnung aus Konverter 12 und Sonotrode 13 wird in einem Maschinengestell gelagert und von einer Presse 14 mit Kraft beaufschlagt und bewegt (siehe Bewegungsrichtung B in Figur 1). Die Presse ist typischerweise eine pneumatische Presse in an sich bekannter Bauform.

Dem Maschinengestell ist ausserdem ein Messsensor 17 zugeordnet, mit dem die von der Presse 14 und der Sonotrode 13 zurückgelegte Wegstrecke gemessen werden kann.

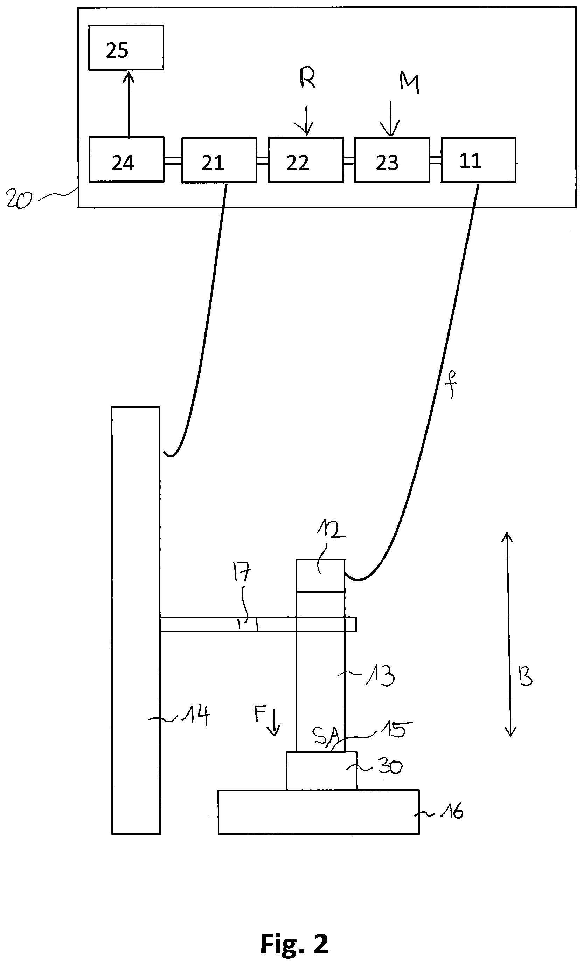

Die Presse 14 wird durch eine Steuereinheit 21 kontrolliert. Die Steuereinheit 21 und der Generator 11 sind Teil einer Überwachungsanordnung 20. Teil der Überwachungsanordnung 20 sind ausserdem eine Recheneinheit 22, eine Messeinheit 23, eine Speichereinheit 24 und eine Ausgabeeinheit 25. Die genannten Einheiten sind in geeigneter Weise funktional miteinander verbunden, beispielsweise über gängige Protokolle. Die Messeinheit 23 dient dazu, Messparameter im Betrieb der Vorrichtung zu messen. Die Messparameter werden insbesondere gemessen, wenn sich das Ultraschallbearbeitungssystem 10 in einer Bearbeitungsposition befindet, wie in Figur 2 dargestellt.

In der Bearbeitungsposition in Figur 2 ist die Arbeitsfläche 15 der Sonotrode in Kontakt mit einer Oberfläche des Prüfkörpers 30. Durch Erzeugen von Ultraschallschwingungen mit einer Frequenz f mittels des Generators 11 werden an der Arbeitsfläche 15 Ultraschallschwingungen S mit einer Amplitude A erzielt. Die Sonotrode 13 wird durch Betätigen der Presse 14 mit einer Kraft F gegen den Prüfkörper 30 gedrückt. Die Messeinheit misst dabei laufend Betriebsparameter des Ultraschallbearbeitungssystems 10. Insbesondere werden die Kraft F, die Amplitude A, die Frequenz f sowie vom Generator 11 aufgenommene Energie und Leistung sowie die zurückgelegte Wegstrecke W gemessen. Die Messung erfolgt sequentiell, wobei einzelne Parameter im Laufe der Zeit mehrfach gemessen werden, während andere Parameter verändert werden. Insbesondere kann beispielsweise die Kraft F laufend erhöht werden, während gleichzeitig die anderen Parameter gemessen werden. Ebenso kann die Amplitude kontinuierlich erhöht werden, während bei gleichbleibender Kraft die anderen Parameter gemessen werden. Je mehr Parameter in Abhängigkeit von sich ändernden anderen Parametern gemessen werden, umso detaillierter ist die Zustandsbeschreibung des Ultraschallbearbeitungssystems 10.

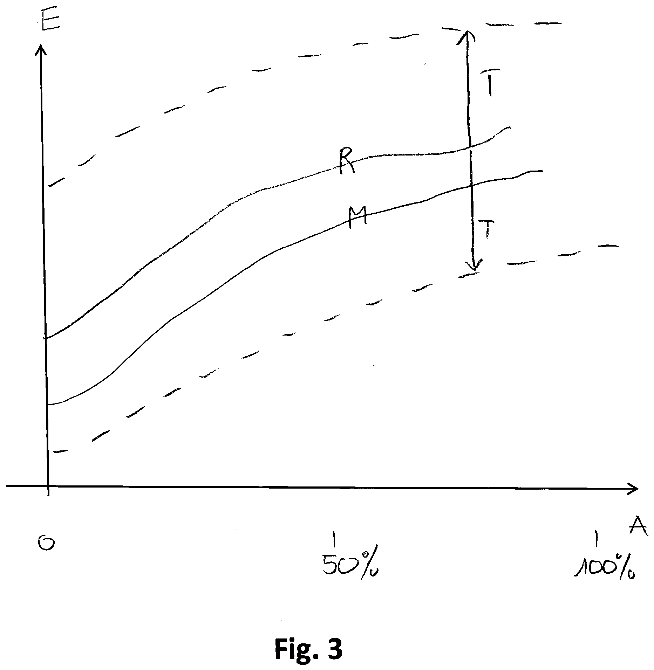

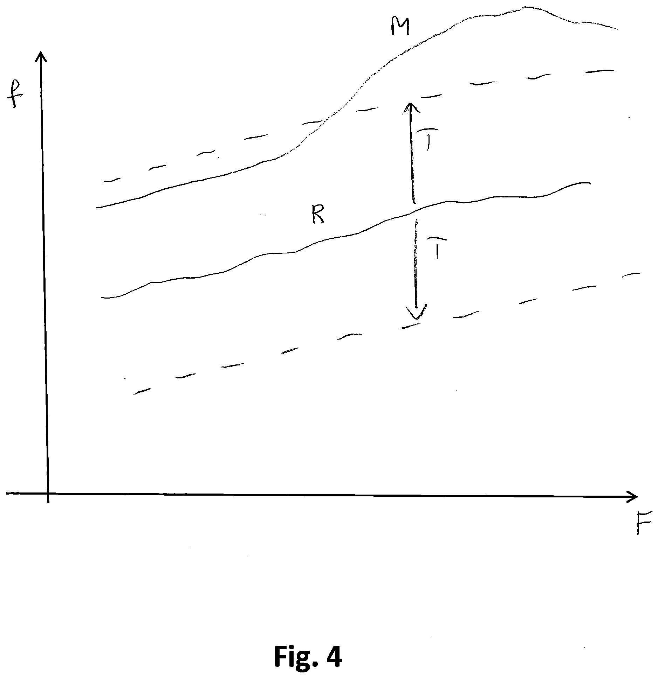

Mit der Messeinheit 23 ermittelten Messparameter M werden danach in der Recheneinheit 22 verarbeitet. Insbesondere werden sie mit im Ultraschallbearbeitungssystem 10 gespeicherten Referenzparametern R (siehe Figuren 3 & 4) verglichen. Im Vergleich wird festgestellt, ob sich die Messparameter M noch innerhalb eines Toleranzbereichs T um den Referenzparameter R befinden.

Die Figuren 3 & 4 zeigen schematisch einen solchen Vergleich. In Figur 3 wird die durch den Generator 11 aufgenommene Energie E in Abhängigkeit einer zunehmenden Amplitude A gemessen. Die Amplitude nimmt von 0 bis auf einen maximalen Wert von 100 % kontinuierlich zu. Aufgrund der sich erhöhenden Amplitude nimmt auch die vom Generator aufgenommene Energie E zu. Die Energie ist als Messparameter M schematisch dargestellt. Der Referenzparameter R entspricht dem Verlauf der Energie E in einer initialen Messung, das heisst bei einem frisch initialisierten Ultraschallbearbeitungssystem 10 mit unverbrauchten und ideal eingestellten Komponenten. Solange sich der Messparameter M innerhalb des Toleranzbereichs T um den Referenzparameter R befindet, ist das Ultraschallbearbeitungssystem 10 ausreichend nahe zum Initialzustand.

In Figur 4 ist eine Beziehung von alternativen Mess- und Prozessparametern gezeigt. Die Kraft F mit welcher die Sonotrode 13 beaufschlagt wird, wird dabei kontinuierlich erhöht. Gleichzeitig wird die Frequenz f des Generators gemessen. Aufgrund der zunehmenden Kraft F verändern sich die akustischen Bedingungen im Gesamtsystem und die Frequenz f wird durch den Generator 11 in an sich bekannter Art und Weise nachgeführt. In Figur 4 nimmt die Frequenz f mit zunehmender Kraft F zu. Die Frequenz f bildet in diesem Fall den Messparameter M. Auch hier ist ein idealer Frequenzverlauf als Referenzkurve R dargestellt. Bei zunehmender Kraft F bewegt sich der Referenzparameter M ausserhalb des Toleranzbereichs T. Dies deutet an, dass sich der Zustand des Ultraschallbearbeitungssystems 10 zu weit vom Initialzustand weg bewegt hat und dass entweder Komponenten ausgetauscht, Betriebsparameter angepasst oder zusätzliche Tests durchgeführt werden sollen. Entsprechende Informationen werden dem Bediener auf der Ausgabeeinheit 25 angezeigt, welche ebenfalls Teil der Überwachungsanordnung 20 ist.

Die Recheneinheit ist ausserdem in Wirkverbindung mit der Steuereinheit 21, sodass gezielte Steuerbefehle zum Durchführen der entsprechenden Messungen gegeben werden können.

Die Überwachungsanordnung 20 ist Teil eines an sich bekannten und entsprechend programmierten digitalen Generators zum Erzeugen von Ultraschallschwingungen.

Zum Prüfen, ob der Messparameter M innerhalb des Toleranzbereichs T liegt, sind natürlich auch viel komplexere Vorgänge als die in Figuren 3 und 4 schematisch dargestellten Vergleiche denkbar. Insbesondere können mit BestFit-Algorithmen Messparameter und Referenzparameter verglichen werden. Bevorzugt werden ausserdem parallel oder sequentiell mehrere Messparameter ermittelt und mit den entsprechenden Referenzparametern verglichen. Ein Gesamtresultat auf Basis aller gemessenen Messparameter kann auf geeignete Art und Weise bestimmt werden.

Der Referenzparameter wird ermittelt, indem auf dem gleichen Prüfkörper 30 eine erste Messung mit bestimmten Prozessparametern durchgeführt wird. Der in diesem ersten Messschritt ermittelte initiale Messparameter wird dann als Referenzparameter R bestimmt und in der Speichereinheit 24 gespeichert. Es versteht sich von selbst, dass bei der Verwendung von mehreren Grössen als Messparameter auch mehrere Referenzparameter ermittelt und gespeichert werden.

## Patentansprüche

1. Verfahren zum Überwachen des Zustandes eines Schwingungsbearbeitungssystems (10), insbesondere eines Ultraschallbearbeitungs- und insbesondere Ultraschallschweisssystems, enthaltend mindestens einen Generator (11), einen Konverter (12), eine mit dem Konverter (12) zu Schwingungen, insbesondere Ultraschallschwingungen (S), anregbare Sonotrode (13) und einen Vorschub (14) zum Bewegen der Sonotrode (13) und zum Beaufschlagen der Sonotrode (13) mit einer Kraft (F), enthaltend die Schritte
- Inkontaktbringen einer Arbeitsfläche (15) der Sonotrode (13) mit einem Prüfkörper (30), insbesondere derart, dass die Sonotrode (13) eine Kraft (F) auf den Prüfkörper (30) ausübt,
- Einleiten von Schwingungen, insbesondere Ultraschallschwingungen (S), von der Sonotrode (13) in den Prüfkörper (30),
- Bestimmen wenigstens eines Messparameters (M) des Schwingungsbearbeitungssystems (10),
- Vergleichen des Messparameters (M) mit einem Referenzparameter (R),
- Bestimmen, ob der Messparameter (M) innerhalb eines Toleranzbereichs (T) um den Referenzparameter (R) liegt,
wobei der Prüfkörper (30) und die Betriebsparameter derart ausgebildet und eingestellt sind, dass durch das Einleiten der Schwingungen keine dauerhafte Veränderung des Prüfkörpers (30) erfolgt.

2. Verfahren nach Anspruch 1, wobei der Referenzparameter (R) im Schwingungsbearbeitungssystem (10) gespeichert ist und bevorzugt erzeugt wird durch
- Inkontaktbringen der Arbeitsfläche (15) der Sonotrode (13) mit dem Prüfkörper (30),
- Einleiten von Schwingungen, insbesondere Ultraschallschwingungen (S), von der Sonotrode (13) in den Prüfkörper (30),
- Bestimmen wenigstens eines initialen Messparameters (M) des Schwingungsbearbeitungssystems (10) und
- Speichern des initialen Messparameters (M) als Referenzparameter (R),
wobei die Betriebsparameter des Schwingungsbearbeitungssystems (10) für die Erzeugung des Referenzparameters (R) identisch sind zu den Betriebsparametern des Schwingungsbearbeitungssystems (10) während der Überwachung des Schwingungsbearbeitungssystems (10).

3. Verfahren nach einem der Ansprüche 1 oder 2, wobei eine Warnung ausgegeben wird und/oder wenigstens ein Betriebsparameter für weitere Schwingungsbearbeitungsvorgänge, insbesondere weitere Ultraschallbearbeitungsvorgänge, angepasst wird und/oder ein Folgetest durchgeführt wird, wenn der Messparameter (M) ausserhalb des Toleranzbereichs (T) liegt.

4. Verfahren nach einem der Ansprüche 1 bis 3, wobei während der Einleitung der Schwingungen (S) in den Prüfkörper (30) die auf den Prüfkörper (30) ausgeübte Kraft (F), die Amplitude (A) der Schwingungen (S), die Frequenz (f) der Schwingungen (S) und/oder die Temperatur verändert werden und dabei der Messparameter (M) laufend bestimmt wird.

5. Verfahren nach Anspruch 4, wobei während der Einleitung der Schwingungen (S) in den Prüfkörper (30) die Amplitude (A) der auf den Prüfkörper (30) ausgebübten Schwingungen (S) von einem Startwert bis zu einem Endwert erhöht wird, insbesondere von etwa 20 % bis auf 100 % der maximalen Amplitude.

6. Verfahren nach einem der Ansprüche 1 bis 5, wobei die Messparameter (M) ausgewählt sind aus der Gruppe von
- durch den Generator (11) aufgenommene Energie,
- durch den Generator (11) aufgenommene Leistung,
- Betriebsfrequenz (f) des Generators,
- Amplitude (A) der Sonotrode (13),
- durch den Vorschub (14) ausgeübte Kraft (F),
- von der Sonotrode (13) zurückgelegte Wegstrecke (W),
- Temperatur eines Werkzeugs, insbesondere der Sonotrode,
- Schall.

7. Verfahren nach einem der Ansprüche 1 bis 6, wobei aufgrund der Bestimmung, ob der Messparameter (M) innerhalb eines Toleranzbereichs (T) um den Referenzparameter (R) liegt, ein Verschleiss der Arbeitsfläche (15) der Sonotrode (13) ermittelt und bevorzugt im Schwingungsbearbeitungssystem (10) ausgegeben wird.

## Claims

1. Method for monitoring the state of a vibration processing system (10), in particular an ultrasonic processing and in particular ultrasonic welding system, comprising at least one generator (11), a converter (12), a sonotrode (13) excitable by the converter (12) to vibrations, in particular ultrasonic vibrations (S), and a feed (14) for moving the sonotrode (13) and for applying a force (F) to the sonotrode (13), comprising the steps of
- bringing into contact a working surface (15) of the sonotrode (13) with a test body (30), in particular such that the sonotrode (13) exerts a force (F) on the test body (30),
- initiating vibrations, in particular ultrasonic vibrations (S), from the sonotrode (13) into the test body (30),
- determining at least one measurement parameter (M) of the vibration processing system (10),
- comparing the measurement parameter (M) with a reference parameter (R),
- determining whether the measurement parameter (M) lies within a tolerance range (T) around the reference parameter (R),
wherein the test body (30) and the operating parameters are designed and set such that no permanent change of the test body (30) occurs due to the initiation of the vibrations.

2. Method according to claim 1, wherein the reference parameter (R) is stored in the vibration processing system (10) and is preferably generated by
- bringing into contact the working surface (15) of the sonotrode (13) with the test body (30),
- initiating vibrations, in particular ultrasonic vibrations (S), from the sonotrode (13) into the test body (30),
- determining at least one initial measurement parameter (M) of the vibration processing system (10) and
- storing the initial measurement parameter (M) as a reference parameter (R),
wherein the operating parameters of the vibration processing system (10) for generating the reference parameter (R) are identical to the operating parameters of the vibration processing system (10) during the monitoring of the vibration processing system (10).

3. Method according to one of claims 1 or 2, wherein a warning is issued and/or at least one operating parameter for further vibration processing operations, in particular further ultrasonic processing operations, is adjusted and/or a follow-up test is performed if the measurement parameter (M) lies outside the tolerance range (T).

4. Method according to one of claims 1 to 3, wherein during the initiation of the vibrations (S) into the test body (30), the force (F) exerted on the test body (30), the amplitude (A) of the vibrations (S), the frequency (f) of the vibrations (S) and/or the temperature are changed, and the measurement parameter (M) is continuously determined.

5. Method according to claim 4, wherein during the initiation of the vibrations (S) into the test body (30), the amplitude (A) of the vibrations (S) exerted on the test body (30) is increased from a start value to an end value, in particular from about 20% up to 100% of the maximum amplitude.

6. Method according to one of claims 1 to 5, wherein the measurement parameters (M) are selected from the group consisting of
- energy consumed by the generator (11),
- power consumed by the generator (11),
- operating frequency (f) of the generator,
- amplitude (A) of the sonotrode (13),
- force (F) exerted by the feed (14),
- distance (W) covered by the sonotrode (13),
- temperature of a tool, in particular the sonotrode,
- sound.

7. Method according to one of claims 1 to 6, wherein, based on the determination of whether the measurement parameter (M) lies within a tolerance range (T) around the reference parameter (R), wear of the working surface (15) of the sonotrode (13) is determined and preferably output in the vibration processing system (10).

## Revendications

1. Procédé de surveillance de l'état d'un système de traitement par vibrations (10), en particulier d'un système de traitement par ultrasons et en particulier d'un système de soudage par ultrasons, comprenant au moins un générateur (11), un convertisseur (12), une sonotrode (13) excitable en vibrations, en particulier en vibrations ultrasonores (S), par le convertisseur (12) et un dispositif d'avance (14) pour déplacer la sonotrode (13) et pour appliquer une force (F) à la sonotrode (13), comprenant les étapes de
- mise en contact d'une surface de travail (15) de la sonotrode (13) avec un corps d'essai (30), en particulier de telle sorte que la sonotrode (13) exerce une force (F) sur le corps d'essai (30),
- introduction de vibrations, en particulier de vibrations ultrasonores (S), de la sonotrode (13) dans le corps d'essai (30),
- détermination d'au moins un paramètre de mesure (M) du système de traitement par vibrations (10),
- comparaison du paramètre de mesure (M) avec un paramètre de référence (R),
- détermination si le paramètre de mesure (M) se situe dans une plage de tolérance (T) autour du paramètre de référence (R),
le corps d'essai (30) et les paramètres de fonctionnement étant conçus et réglés de telle sorte que l'introduction des vibrations n'entraîne aucune modification permanente du corps d'essai (30).

2. Procédé selon la revendication 1, dans lequel le paramètre de référence (R) est stocké dans le système de traitement par vibrations (10) et est de préférence généré par
- mise en contact de la surface de travail (15) de la sonotrode (13) avec le corps d'essai (30),
- introduction de vibrations, en particulier de vibrations ultrasonores (S), de la sonotrode (13) dans le corps d'essai (30),
- détermination d'au moins un paramètre de mesure initial (M) du système de traitement par vibrations (10) et
- stockage du paramètre de mesure initial (M) en tant que paramètre de référence (R),
les paramètres de fonctionnement du système de traitement par vibrations (10) pour la génération du paramètre de référence (R) étant identiques aux paramètres de fonctionnement du système de traitement par vibrations (10) pendant la surveillance du système de traitement par vibrations (10).

3. Procédé selon l'une des revendications 1 ou 2, dans lequel une alerte est émise et/ou au moins un paramètre de fonctionnement pour d'autres opérations de traitement par vibrations, en particulier d'autres opérations de traitement par ultrasons, est ajusté et/ou un test de suivi est effectué si le paramètre de mesure (M) se situe en dehors de la plage de tolérance (T).

4. Procédé selon l'une des revendications 1 à 3, dans lequel, pendant l'introduction des vibrations (S) dans le corps d'essai (30), la force (F) exercée sur le corps d'essai (30), l'amplitude (A) des vibrations (S), la fréquence (f) des vibrations (S) et/ou la température sont modifiées et le paramètre de mesure (M) est déterminé en continu.

5. Procédé selon la revendication 4, dans lequel, pendant l'introduction des vibrations (S) dans le corps d'essai (30), l'amplitude (A) des vibrations (S) exercées sur le corps d'essai (30) est augmentée d'une valeur de départ à une valeur finale, en particulier d'environ 20 % jusqu'à 100 % de l'amplitude maximale.

6. Procédé selon l'une des revendications 1 à 5, dans lequel les paramètres de mesure (M) sont choisis dans le groupe comprenant
- l'énergie absorbée par le générateur (11),
- la puissance absorbée par le générateur (11),
- la fréquence de fonctionnement (f) du générateur,
- l'amplitude (A) de la sonotrode (13),
- la force (F) exercée par le dispositif d'avance (14),
- la distance parcourue (W) par la sonotrode (13),
- la température d'un outil, en particulier de la sonotrode,
- le son.

7. Procédé selon l'une des revendications 1 à 6, dans lequel, sur la base de la détermination si le paramètre de mesure (M) se situe dans une plage de tolérance (T) autour du paramètre de référence (R), une usure de la surface de travail (15) de la sonotrode (13) est détectée et de préférence affichée dans le système de traitement par vibrations (10).
